# EUROPEAN PATENT SPECIFICATION

(11) **EP 4 263 194 B1**
(45) Date of publication and mention of the grant of the patent: **06.11.2024**
(21) Application number: 21839267.8
(22) Date of filing: 16.12.2021
(51) Int. Cl.: B29D 30/00, B29D 30/20

(54) **METHOD FOR MANAGING A PROCESS FOR BUILDING TYRES FOR VEHICLE WHEELS AND BUILDING LINE**
VERFAHREN ZUR VERWALTUNG EINES VERFAHRENS ZUR HERSTELLUNG VON REIFEN FÜR FAHRZEUGRÄDER UND BAULINIE
PROCÉDÉ DE GESTION D'UN PROCESSUS DE FABRICATION DE PNEUS POUR DES ROUES DE VÉHICULE ET CHAÎNE DE FABRICATION

(30) Priority: 17.12.2020 IT 202000031280
(43) Date of publication of application: 25.10.2023
(73) Proprietor: Pirelli Tyre S.p.A., 20126 Milano (IT)
(72) Inventor: DE COL, Christian, 20126 Milano (IT); MIRTO, Antonio, 20128 Milano (IT); PORTINARI, Gianni Enrico, 20126 Milano (IT); CONTI, Davide, 20126 Milano (IT)
(74) Representative: Porta & Consulenti Associati S.p.A.
(86) International application number: PCT/IB2021/061819
(87) International publication number: WO 2022/130265

(56) References cited:
- WO-A1-2014/060885
- WO-A1-2016/097905

## Description

The invention relates to a method for managing a process for building tyres for vehicle wheels. The invention also relates to a building line of tyres for vehicle wheels.

A tyre for vehicle wheels typically comprises a carcass structure, shaped according to a substantially toroidal configuration, comprising at least one carcass ply having axially opposite ends. The latter are engaged to respective annular anchoring structures, each of them normally formed by at least one substantially circumferential annular insert called "bead core" on which at least one filling insert is generally applied, tapering radially away from the rotation axis. The annular anchoring structures are located in areas usually identified as "beads". The beads have an inner diameter substantially corresponding to a so-called "fitting diameter" of the tyre on a respective mounting rim.

The tyre also comprises a crown structure comprising at least one belt strip located in a radially outer position with respect to the carcass ply and a tread band that is radially outer with respect to the belt strip. Longitudinal and transverse grooves are typically shaped on the tread band, arranged to define a desired tread pattern. A so-called 'under-layer' made of elastomeric material of suitable properties to obtain a stable union between the belt strip(s) and the tread band can be arranged between the tread band and the belt strip(s).

The tyre also comprises a pair of so-called sidewalls made of elastomeric material that represent the axially outer surfaces of the tyre, with respect to a mid-plane perpendicular to the rotation axis of the tyre. For example, the sidewalls represent the axially outer surfaces with respect to the annular anchoring structures, the carcass ply(-ies), the belt strip(s) and possibly at least a portion of tread band.

In "tubeless" tyres, there is at least one layer of elastomeric material, usually called "liner", in radially inner position with respect to the carcass ply, which is airtight and generally extends from one bead to the other.

A tyre production cycle provides for a building process of a green tyre and a subsequent moulding and vulcanization process. In particular, the green tyre building process comprises building a carcass structure, building a crown structure, and a shaping and assembly step in which the carcass structure is toroidally shaped by assembling it to the crown structure. The green tyre thus built is transferred to a moulding and vulcanization line where a moulding and vulcanization process is carried out that is adapted to define the structure of the tyre according to a desired geometry and tread pattern.

The term "elastomeric material" is meant to indicate a composition comprising at least one elastomeric polymer and at least one reinforcing filler. This composition may also comprise additives like, for example, a cross-linking agent and/or a plasticizer. Thanks to the presence of the cross-linking agent, this material can be cross-linked by heating to form the final product.

The term "component" or "structural component" of a tyre is meant to indicate any part of the tyre capable of performing its own function or a part thereof. Examples of structural components of the tyre are: liner, under-liner, anti-abrasion inserts, bead core, bead fillers, carcass ply(-ies), belt strip(s), under-belt layer, under tread band layer, sidewalls, sidewall inserts, tread band, textile or metal reinforcements, reinforcing elements made of elastomeric material, etc., or parts thereof.

The terms "axial", "axially", "radial", "radially", "circumferential" and "circumferentially" are used with reference to the tyre or to a drum used in the tyre production process.

In particular, the terms "axial" and "axially" are meant to indicate references/sizes arranged/measured or extending in a direction substantially parallel to the rotation axis of the tyre or drum.

The terms "radial" and "radially" are meant to indicate references/sizes arranged/measured or extending in a direction perpendicular to the rotation axis of the tyre or drum and lying in a plane comprising such a rotation axis.

The terms "circumferential" and "circumferentially" are meant to indicate references/sizes arranged/measured or extending along a circumference that extends about the rotation axis of the tyre or drum.

The term "carcass structure" is meant to indicate a sleeve with a substantially cylindrical shape comprising at least one carcass ply. Generally, the sleeve has axially opposite ends engaged with respective annular anchoring structures adapted to form the beads of the tyre. Preferably, each annular anchoring structure comprises a substantially circumferential annular insert called "bead core" on which at least one filling insert is preferably applied. Preferably, the carcass structure also comprises at least one of: anti-abrasive inserts, liner, under-liner, complex (i.e. the assembly formed by liner, under-liner and anti-abrasive inserts), sidewall inserts, reinforcements, under-belt insert.

The term "crown structure" is meant to indicate the assembly formed at least by belt structure (comprising at least one belt strip) and tread band.

The term "green tyre" is meant to indicate a tyre obtained from the building process and not yet moulded and vulcanized.

The term "finished tyre" is meant to indicate a finished tyre obtained from the manufacturing process that comprises the building of the green tyre and subsequent moulding and vulcanization thereof.

The term "tyre" is meant to indicate a finished tyre or a green tyre or a tyre being processed.

The term "tyre being processed" is meant to indicate a tyre at any step of the relative manufacturing process that goes from building at least a first component constituting the carcass structure and/or the crown structure up to obtaining the finished tyre.

The term "steady-state operating condition" is meant to indicate the normal operating conditions of a building line or process, thus excluding any transient periods, for example, related to a change of production batch.

The term "drum change operating condition" is meant to indicate transient operating conditions of a building line or process related to a drum change, for example for a production batch change.

The term "production batch" is meant to indicate a predetermined quantity of tyres built in a building line or process according to a uniform size.

With reference to a tyre, the term "size" is meant to indicate all the geometric characteristics which distinguish the tyre, in particular at least one of fitting diameter, width of the tread band in plan and height of the sidewalls.

The term "production batch change" is meant to indicate a change from a production batch of tyres of a predetermined size to a production batch of tyres of a different size.

The terms "stable coupling" or "stably coupled" are meant to indicate a coupling that persists during the various steps of a tyre building cycle, in a steady-state operating condition.

The term "building cycle" is meant to indicate the set of operations required to build a tyre, including the movement of a drum along a building path.

The term "sequential and cyclical movement" referring to N drums, with N integer greater than or equal to 1, is meant to indicate, in a steady-state operating condition, a movement according to which the N drums are moved simultaneously one after the other along a building path until the end of the path to then be brought back to the start of the path to begin a new building cycle.

The term "building cycle time" is meant to indicate the time between the exit of a built tyre from a building line or process and the exit of the next built tyre, in a steady-state operating condition.

The terms "upstream", "downstream", "followed by" are meant to refer to a direction of movement of drums along a building path.

WO 2016/097905 to the same Applicant describes a method for managing a carcass structure building line comprising a plurality of stations including a station for unloading a built carcass structure and n building stations each comprising one or more building devices suitable for forming a carcass structure being processed. According to the described method, it is provided to select one from a building cycle and a size change cycle. The building cycle comprises sequentially and cyclically moving m forming drums being processed between the n building stations and the unloading station, with 2≤m≤n. The size change cycle comprises replacing the forming drums being processed one at a time with m incoming forming drums by using a sequence of movement among the building stations that is at least partially different from that provided in the building cycle. At at least one operating time of the size change cycle, at least one building station different from the initial station comprises an incoming forming drum dissociated from the carcass structure being processed. There is also provided a pair of support elements being processed comprising a first and a second support element being processed, suitable for a first size of a carcass structure being processed, and at least one pair of incoming support elements comprising a first and a second incoming support element, suitable for a second size of carcass structure being processed. The size change cycle also comprises the introduction, in the initial station, of a first incoming forming drum associated with the first incoming support element and replacing the second support element being processed with the second incoming support element at the initial station.

WO 2016/097905 specifies that in the case in which each size corresponds to a pair of support elements being processed, the size change cycle provides for both the replacement of the pair of support elements being processed and the replacement of the forming drums being processed.

The Applicant observes that in the system described by WO 2016/097905, when the size change cycle provides for both the replacement of the pair of support elements being processed and the replacement of the drums being processed, the replacement of the pair of support elements being processed is managed manually.

In this context, the Applicant has perceived the need to provide an alternative method for managing a drum change that provides for both the replacement of drums and the replacement of respective support elements.

In particular, the Applicant has perceived the need to optimize such management from a structural and logistical point of view, so as to obtain advantages in terms of management and optimization of the resources used, limitation of the time and investments required.

The Applicant has realized that the aforementioned needs can be satisfied by means of a suitable automated management of the movement of the support elements during a drum change operating condition from a first size to a second size.

More precisely, the Applicant has found that the aforementioned needs can be satisfied by managing to exploit, in a drum change operating condition from a first size to a second size, the same building path and the same resources, which are used in a steady-state operation condition to move the drums of the first size, to carry out the replacement of the support elements of the first size.

In accordance with a first aspect thereof, the invention relates to a method for managing a process for building tyres for vehicle wheels between a steady-state operating condition and a drum change operating condition.

Preferably, during the steady-state operating condition it is provided to sequentially and cyclically move N drums configured for a first size along a building path comprising a first path, with N being an integer greater than or equal to 1.

Preferably, the movement along the first path is carried out by moving, with a moving device, one of the N drums configured for the first size at a time, coupled with a first pair of axially opposite support elements, said first pair of support elements being coupled with the moving device and being configured for said first size.

Preferably, during the drum change operating condition to a second size, it is provided to replace said first pair of support elements with a second pair of support elements configured for said second size.

Preferably, after an exit from the first path of a last drum of the N drums configured for the first size, said replacement comprises coupling said first pair of support elements with a first connecting shaft.

Preferably, after an exit from the first path of a last drum of the N drums configured for the first size, said replacement comprises moving, with the moving device, said first pair of support elements coupled with said first connecting shaft along said first path.

Preferably, after an exit from the first path of a last drum of the N drums configured for the first size, said replacement comprises releasing said first pair of support elements coupled with said first connecting shaft at the end of the first path after having decoupled it from the moving device.

Preferably, after an exit from the first path of a last drum of the N drums configured for the first size, said replacement comprises, after the exit of said first pair of support elements coupled with said first connecting shaft from the first path, coupling said second pair of support elements with said moving device.

In accordance with a second aspect thereof, the invention relates to a building line of tyres for vehicle wheels operating according to a steady-state operating condition and a drum change operating condition.

Preferably, N drums configured for a first size are provided, with N being an integer greater than or equal to 1.

Preferably, a first pair of support elements configured for said first size is provided.

Preferably, a building path is provided which is configured to carry out on said N drums configured for the first size, during the steady-state operating condition, multiple building cycles of tyres according to said first size, the building path comprising a first path.

Preferably, a first connecting shaft is provided.

Preferably, a second pair of support elements configured for a second size is provided.

Preferably, a moving device is provided in said first path that, during the steady-state operating condition, is coupled with said first pair of support elements and is configured to move, along said first path, one of the N drums configured for the first size at a time, coupled with the first pair of support elements, and that, during the drum-change operating condition to said second size, is configured to couple said first connecting shaft with said first pair of support elements, to release said first connecting shaft coupled with said first pair of support elements at the end of said first path and to couple with said second pair of support elements.

Preferably, at least one manipulator is provided which, during the drum change operating condition to said second size, is configured to deliver said first connecting shaft to said moving device.

Preferably, at least one manipulator is provided which, during the drum change operating condition to said second size, is configured to deliver said second pair of support elements to said moving device.

The Applicant deems that thanks to the aforementioned provisions, a drum change involving both the replacement of drums and the replacement of support elements is implemented in a fully automated manner by exploiting the same resources and the same path used to move the N drums during the steady-state operating condition, without the need to interrupt the tyre building process and minimizing the number of additional resources. This advantageously allows the drum change to be carried out in a fully automated manner, minimizing the investment required and the impact on the layout of the line, on the tyre building process and the building cycle time.

The present invention in at least one of the aforementioned aspects may have at least one of the following preferred features.

Preferably, said building path comprises a second path that follows said first path, said first pair of support elements being released to said second path at the end of the first path.

Preferably, before the coupling with said first pair of support elements, said first connecting shaft is picked up from a storage station upstream of the first path.

Preferably, said replacement comprises moving said first pair of support elements coupled with said first connecting shaft along said second path.

Preferably, during the steady-state operating condition, said first pair of support elements is stably coupled with the moving device.

Preferably, the first path has an initial station.

Preferably, the second path has a final station.

Preferably, during the steady-state operating condition, after the movement along said first path, the N drums configured for the first size are moved one after the other along said second path to end up in the final station.

Preferably, during the steady-state operating condition, after the movement along said first path, the N drums configured for the first size are moved one after the other along said second path up to the final station to then be brought back to the initial station of the first path to continue with the sequential and cyclical movement along said building path.

Preferably, during the steady-state operating condition, the N drums configured for the first size arriving at said final station are brought back to the initial station of the first path after having unloaded the tyres being processed built on them at an unloading station (preferably at a shaping and assembly station), downstream of the second path.

Preferably, during the drum change operating condition, said first pair of support elements coupled with said first connecting shaft is moved along said building path following said last drum of the N drums.

Preferably, during the drum change operating condition, after the movement along said second path, said first pair of support elements coupled with said first connecting shaft is delivered to said storage station downstream of the second path.

Preferably, during the drum change operating condition, the coupling of said first pair of support elements with the first connecting shaft is carried out after having picked up said first connecting shaft from the storage station and having delivered it to said moving device.

Preferably, the coupling of said second pair of support elements with said moving device is carried out by picking up a second connecting shaft from said storage station, said second connecting shaft being coupled with said second pair of support elements.

Preferably, the coupling of said second pair of support elements with said moving device is carried out by delivering said second connecting shaft taken from the storage station to said first path where said second pair of support elements is coupled with said moving device.

Preferably, the coupling of said second pair of support elements with said moving device comprises moving, with the moving device, said second pair of support elements coupled with said second connecting shaft along said first path.

Preferably, the coupling of said second pair of support elements with said moving device comprises the release to said second path of said second connecting shaft after having decoupled it from said second pair of support elements that remains coupled with the moving device.

Preferably, during the drum change operating condition, it is provided to move said second connecting shaft, decoupled from said second pair of support elements, along said second path.

In this way, said second connecting shaft is moved along said second path following said first pair of support elements coupled with said first connecting shaft which in turn follows, along said second path, the last of the N drums configured for the first size.

Preferably, after the movement along said second path, said second connecting shaft is delivered to said storage station downstream of the second path.

Preferably, during the drum change operating condition, N drums configured for the second size are provided.

Preferably, after the coupling of said second pair of support elements with said moving device (and the exit of the second connecting shaft from the first path), it is provided to deliver one after the other the N drums configured for the second size to the moving device of the first path where, one at a time, they are coupled with said second pair of support elements for the movement along said first path.

Preferably, after the movement along said first path, the N drums configured for the second size are moved one after the other along said second path.

Preferably, during the drum change operating condition, after the movement along said second path (120), the N drums configured for the first size are picked up from the final station to be delivered to a transfer device, after having unloaded the tyres being processed built on them to the unloading station downstream of the second path.

Preferably, during the drum change operating condition, it is provided to make said N drums configured for the first size exit the building path as they finish their movement along the second path. More preferably, as they arrive at the unloading station.

Preferably, it is provided to make said N drums configured for the first size exit the building path, delivering them, as they arrive at the unloading station, to a transfer device.

Preferably, once said N drums configured for the first size have all been delivered to the transfer device and the N drums configured for the second size have all been delivered, one after the other, to the moving device, the steady-state operating condition is re-established in which the N drums configured for the second size are sequentially and cyclically moved along the building path.

Preferably, the movement along the first path is carried out by moving, with the moving device, the N drums configured for the second size coupled with the second pair of support elements, one at a time.

Preferably, after the movement along said first path, the N drums configured for the second size are moved one after the other along said second path up to the final station from which they are picked up to be brought back to the initial station of the first path, after having unloaded the tyres being processed built on them to the unloading station downstream of the second path.

Preferably, the N drums configured for the first (second) size are moved along the second path decoupled from the first (second) pair of support elements.

Preferably, during the steady-state operating condition, while the N drums configured for the first (second) size are moved, one at a time, along the first path, coupled with the first (second) pair of support elements, at least part of the remaining N-1 drums configured for the first (second) size is simultaneously moved along the second path.

Preferably, the first size corresponds to a first fitting diameter.

Preferably, the second size corresponds to a second fitting diameter different from the first fitting diameter.

Preferably, the first path is followed by the second path along the direction of movement of the N drums along the building path
Preferably, during the sequential and cyclical movement of the N drums configured for the first (second) size along the building path, carcass structures of the tyres being processed are built.

Preferably, said building path comprises a second path that follows said first path, and said moving device, during the drum change operating condition to said second size, is configured to release said first connecting shaft to said second path.

Preferably, a storage station is provided that is configured to store at least said first connecting shaft and said second pair of support elements configured for said second size.

Preferably, said at least one manipulator, during the drum change operating condition to said second size, is configured to pick up said first shaft and said second pair of support elements from said storage station.

Preferably, support and transportation devices are provided that are configured to pick up, one after the other, said N drums configured for the first size from said first path and to move them along said second path.

Preferably, said support and transportation devices, during the drum change operating condition to said second size, are configured to pick up said first pair of support elements coupled with said first connecting shaft from said first path and to move said first pair of support elements coupled with said first connecting shaft along said second path.

Preferably, the moving device is configured, during the drum change operating condition to said second size, to move said first pair of support elements coupled with said first connecting shaft along said first path before releasing it to said second path.

Preferably, said at least one manipulator is configured, during the steady state operating condition, to deliver the N drums configured for the first size, one after the other, to said moving device, preferably at the initial station of the first path.

Preferably, said at least one manipulator is configured, during the steady state operating condition, to pick up the N drums configured for the first size, one after the other, from a final station of the second path and deliver them to said moving device, preferably at the initial station of the first path.

Preferably, said at least one manipulator is configured, during the steady-state operating condition, to pick up the N drums configured for the first size, one after the other, from the final station of the second path, to transfer them to an unloading station for unloading respective tyres being processed built on them and to then deliver the N drums configured for the first size to said moving device, preferably at the initial station of the first path.

Preferably, said at least one manipulator is configured, during the drum change operating condition to the second size, to pick up the N drums configured for the first size, one after the other, from the final station of the second path, to transfer them to an unloading station for unloading respective tyres being processed built on them and to then deliver the N drums configured for the first size to a transfer device. For example, the transfer device may be configured to transport the N drums configured for the first size into a suitable store inside or outside the line.

In an embodiment, the line is configured for building carcass structures. In this case, the tyres being processed unloaded in the unloading station are carcass structures. Furthermore, the unloading station is preferably located at a shaping and assembly station.

Preferably, said at least one manipulator is configured to pick up said first pair of support elements coupled with said first connecting shaft from the final station of said second path and deliver it to said storage station.

Preferably, the building line comprises a second connecting shaft.

Preferably, the storage station is configured to store a second connecting shaft coupled with said second pair of support elements.

Preferably, during the drum change operating condition to said second size, said at least one manipulator is configured to pick up said second connecting shaft coupled with said second pair of support elements from the storage station and deliver it to said moving device. More preferably at the initial station of the first path.

Preferably, during the drum change operating condition to said second size, the moving device is configured to receive from said at least one manipulator said second connecting shaft coupled with said second pair of support elements, to couple said second pair of support elements with said moving device and to decouple said second pair of support elements from said second connecting shaft.

Preferably, during the drum change operating condition to said second size, the moving device is configured to move said second connecting shaft coupled with said second pair of support elements along said first path before decoupling said second pair of support elements from said second connecting shaft and releasing said second connecting shaft to said second path.

Preferably, said support and transportation devices are configured, during the drum change operating condition to said second size, to pick up said second connecting shaft decoupled from the second pair of supporting elements from said moving device and move it along said second path. More preferably, to the final station thereof.

Preferably, said at least one manipulator is configured, during the drum change operating condition to said second size, to pick up said second connecting shaft decoupled from the second pair of support elements from the final station of said second path and deliver it to said storage station.

Preferably, the line comprises N drums configured for the second size.

Preferably, the line also comprises a transfer device configured to transport, during the drum change operating condition, the N drums configured for the second size within the line. More preferably, taking them from a suitable store inside or outside the line.

Preferably, the transfer device is configured to transport, during the drum change operating condition, the N drums configured for the first size. More preferably, the transfer device is configured to pick up the N drums configured for the first size from the unloading station and deliver them to a suitable store inside or outside the line.

Preferably, after the coupling of said second pair of support elements with said moving device, said at least one manipulator is adapted to deliver one after the other the N drums configured for the second size to the moving device of the first path. More preferably, after having taken them from said transfer device.

Preferably, the moving device is configured to move the N drums configured for the second size, coupled with the second pair of support elements, one at a time along said first path.

Preferably, the support and transportation devices are configured to pick up, one after the other, said N drums configured for the second size from said first path and to move them along said second path.

Preferably, said at least one manipulator is configured to pick up the N drums configured for the second size one after the other from the final station of the second path, to transfer them to an unloading station for unloading tyres being processed built on them and to then again deliver the N drums configured for the second size to said moving device, preferably at the initial station of the first path.

Preferably, the first connecting shaft has a predetermined axial extension that is comparable, more preferably substantially equal, to a maximum axial extension provided for the N drums configured for the first size and the N drums configured for the second size.

Preferably, the second connecting shaft has a predetermined axial extension that is comparable, more preferably substantially equal, to a maximum axial extension provided for the N drums configured for the first size and the N drums configured for the second size.

Preferably, the first connecting shaft is coupled with said first pair of support elements so as to keep its predefined axial extension unchanged. In other words, the first pair of support elements is coupled with the first connecting shaft so as not to protrude with respect to two axial ends thereof.

Preferably, the second connecting shaft is coupled with said second pair of support elements so as to keep its predefined axial extension unchanged. In other words, the second pair of support elements is coupled with the second connecting shaft so as not to protrude with respect to two axial ends thereof.

Preferably, the first connecting shaft has two axial ends having substantially the same shape and dimensions as two axial ends of the drum configured for the first size.

Preferably, the second connecting shaft has two axial ends having substantially the same shape and dimensions as two axial ends of the drum configured for the second size.

Preferably, the first connecting shaft is substantially the same as the second connecting shaft.

Preferably, the N drums configured for the first size and the N drums configured for the second size have axial ends with substantially the same shape and dimensions.

The aforementioned provisions, taken individually or preferably combined together, advantageously make it possible to exploit the same resources (e.g. manipulator, moving device, support and transportation devices) that are configured to manipulate the drums also to manipulate the first connecting shaft and the second connecting shaft, without the need for specific adaptations or additional resources.

Preferably, the moving device is configured to recognize the first connecting shaft and accordingly activate the coupling of said first pair of support elements with said first connecting shaft, the movement of said first pair of support elements coupled with said first connecting shaft along the first path (without carrying out any building operation) and then their decoupling from the moving device for release to the second path.

Preferably, the moving device is configured to recognize said second connecting shaft coupled with said second pair of support elements and accordingly activate the coupling of said second pair of support elements with said moving device, the movement of said second pair of support elements coupled with said second connecting shaft along the first path (without carrying out any building operation), the decoupling of said second pair of support elements from said second connecting shaft for releasing the second connecting shaft to the second path.

Preferably, the second path is configured to recognize the first pair of support elements coupled with said first connecting shaft so as to disable tyre building operations upon its passage along the second path.

Preferably, the second path is configured to recognize the second connecting shaft so as to disable tyre building operations upon its passage along the second path.

Preferably, said at least one manipulator is configured to recognize the first connecting shaft and the second connecting shaft so as to deliver them to the storage station, after pickup from the final station of the second path.

Further features and advantages of the present invention will be made clear by the following detailed description of some embodiments thereof, provided solely as non-limiting examples, wherein said description will be carried out with reference to the attached drawings, in which:
- figure 1 shows a radial half-section of a tyre that can be made through the method and the line according to the invention;
- figure 2 schematically shows a line for building tyres for vehicle wheels according to an embodiment of the invention during a steady-state operating condition with drums and a first pair of support elements configured for a first size;
- figure 3 shows the line of figure 2 in a step of a drum change operating condition from the first size to a second size;
- figure 4 shows the line of figure 3 during a steady state operating condition with drums and a second pair of support elements configured for the second size, after the change of drums from the first size to the second size;
- figure 5 schematically shows a plant for producing tyres for vehicle wheels according to an embodiment of the invention.

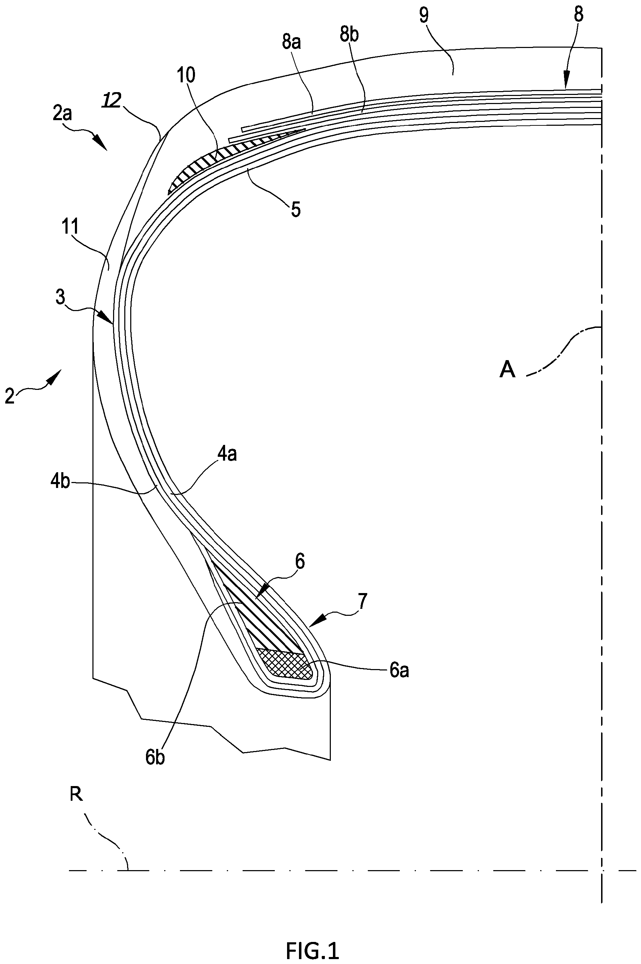

Figure 1 shows an example of a tyre 2 that can be produced in a plant 1 for producing tyres for vehicle wheels.

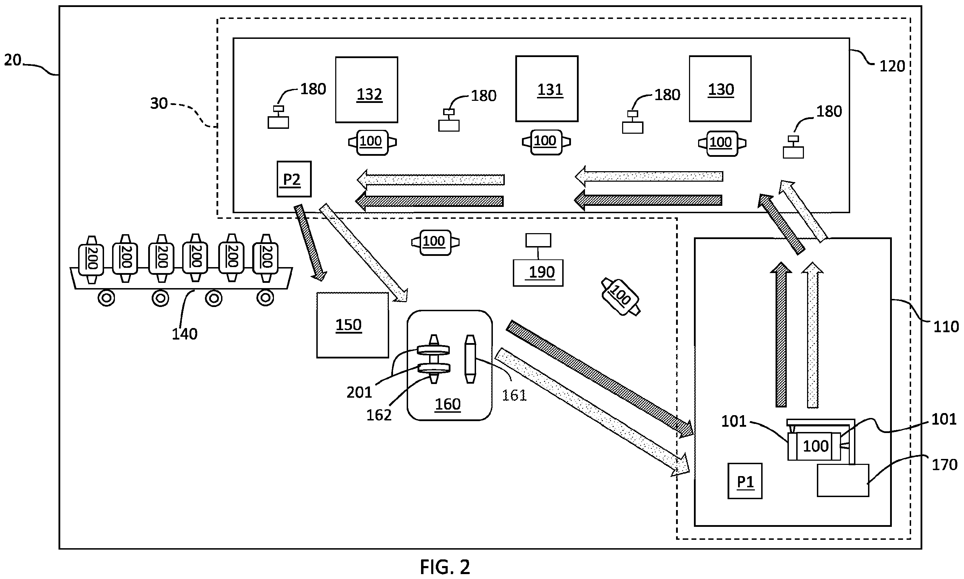

The tyre 2 has a mid-plane A perpendicular to the rotation axis R thereof (it should be noted that in figure 2 the position of the rotation axis R with respect to the section of the tyre 2 is shown in a totally indicative and schematic manner). The mid-plane A divides the tyre 2 into a first axial half 2a and a second axial half. For the sake of simplicity of illustration, figure 2 shows only the first axial half 2a of the tyre 2, the other half being substantially the mirror-image (except for the tread pattern which may not be symmetrical with respect to the aforementioned mid-plane A).

The tyre 2 essentially comprises a carcass structure 3 having one or two carcass plies 4a, 4b. A layer of impermeable elastomeric material or so-called liner 5 is applied internally to the carcass ply(-ies) 4a, 4b. Two annular anchoring structures 6 (only the axial half 2a of which is shown in figure 2) are engaged, in axially opposite positions (with respect to the mid-plane A), with respective axial ends of the carcass ply(-ies) 4a, 4b. The two annular anchoring structures 6 each comprise a so-called bead core 6a bearing an elastomeric filler 6b in a radially outer position. The two annular anchoring structures 6 are integrated close to areas usually identified with the name "beads" 7 (of which only that of the axial half 2a is shown in figure 2), at which the engagement between the tyre 2 and a respective mounting rim usually takes place. A belt structure 8 comprising belt layers 8a, 8b is circumferentially applied around the carcass ply(-ies) 4a, 4b, and a tread band 9 is circumferentially juxtaposed over the belt structure 8. The belt structure 8 may comprise a further so-called zero degree layer (not illustrated) in a radially outer position with respect to the aforementioned layers 8a, 8b. So-called "under-belt inserts" 10 each arranged between the carcass ply(-ies) 4a, 4b and one of the axially opposite end edges of the belt structure 8 may also be associated with the belt structure 8. Two sidewalls 11, each extending from a corresponding bead 7 to a corresponding side edge of the tread band 9, are applied in axially opposite positions (with respect to the mid-plane A) on the carcass ply(-ies) 4a, 4b. The assembly of the portion of each sidewall 11 close to the respective side edge of the tread band 9 and of each portion of the tread band 9 close to the respective sidewall 11 is known as the shoulder 12 of the tyre.

Figure 2 shows a line 20 for building tyres 2 for vehicle wheels operating according to a steady state operating condition and a drum change operating condition, according to an embodiment of the invention.

The line 20 is configured to implement a method for managing a process for building tyres for vehicle wheels according to an embodiment of the invention.

The line 20 includes N drums 100 configured for a first size, with N being an integer greater than or equal to 1 (for example, in the figure N=6).

The line 20 also comprises a building path 30 configured for building, on the N drums, tyres according to said first size, during the steady-state operating condition of the line 20.

The building path 30 comprises a first path 110 and a second path 120, respectively, for building a first part of components and a second part of components of the tyre being processed according to the first size.

The first path 110 comprises a plurality of workstations (not illustrated). Such workstations are preferably sequentially arranged between two ends of the first path 110, an initial station P1 being preferably positioned at one of said two ends. Preferably, each of the N drums 100 configured for the first size may be moved between said plurality of workstations in a sequence which is the same as or different from the spatial sequence of such a plurality of workstations.

In an embodiment (not illustrated), along the first path 110 each of the N drums 100 configured for the first size is moved between one or more of said plurality of workstations starting from the initial station P1 and then returned to said initial station P1. In this embodiment, the initial station P1 acts, for the first path 110, as an entry/exit (or, similarly, drum loading/unloading) station where both empty drums 100 configured for the first size, entering the first path 110 (ready to start a new building cycle), and drums 100 configured for the first size, carrying respective tyres being processed, exiting from the first path 110 (ready to continue the building cycle along the second path 120) transit.

Along the first path 110, each of the N drums 100 configured for the first size is preferably moved by means of a moving device 170, preferably in the form of a shuttle. In an embodiment (not illustrated), the shuttle is preferably capable of moving, moved by a suitable motor, along suitable guides (preferably rectilinear) in two opposite directions starting from/going towards said initial station P1.

Preferably, the initial station P1, as an entry station for the first path 110 is configured to arrange the N drums 100 configured for the first size in such a way that their axial extension is a function of geometric characteristics of the tyre being processed.

The second path 120 comprises a plurality of workstations 130, 131, 132 (for example three, as illustrated in figure 2).

The line 20 also comprises support and transportation devices 180 which, during the steady state operating condition, are configured to pick up, one after the other, said N drums 100 configured for the first size from said first path 110 and to move them between the work stations 130, 131, 132 of the second path 120 and support them during the building of the respective parts of tyre components.

In an embodiment, the support and transportation devices 180 are anthropomorphic robots, preferably with a robotized arm having at least 6 axes of movement.

The line 20 also comprises a first pair of support elements 101 configured for said first size. During the steady state operating condition, the moving device 170 in said first path 110 is stably coupled with said first pair of support elements 101 and is configured to move, along said first path 110, one drum at a time of the N drums 100 configured for said first size, coupled with said first pair of support elements 101.

In this way, during the steady state operating condition, while one of the N drums 100 configured for the first size at a time is moved along the first path 110, coupled with the first pair of support elements 101, at least part of the remaining N-1 drums (for N>1) configured for the first size is moved (simultaneously for N>2) along the second path 120.

Furthermore, while along the first path 110 each drum 100 configured for the first size is moved with the two axial ends thereof respectively coupled with the two support elements 101, along the second path 120 the drums 100 configured for the first size are decoupled from the support elements 101 which remain stably coupled with the moving device 170.

For example, the moving device 170 comprises a tip and a counter tip for supporting the two support elements 101 of the first pair at two opposite axial ends of each drum 100 configured for the first size.

The line 20 also comprises an unloading station 150.

The line 20 also comprises at least one manipulator 190 which is configured, during the steady state operating condition, to pick up one after the other the N drums 100 configured for the first size from a final station P2 of the second path 120 and to deliver the respective tyres being processed built on them to the unloading station 150 and the N drums 100 configured for the first size (thus dissociated from the respective tyres being processed) to said moving device 170, preferably at the initial station P1 of the first path 110.

In this way, as schematically illustrated in figure 2 with the dark grey arrows, during the steady state operating condition, a sequential and cyclical movement of the N drums 100 configured for the first size is implemented, according to which, after the movement along the first path 110 starting from the initial station P1, the N drums 100 configured for the first size are moved one after the other along the second path 120 up to the final station P2 to then be brought back, passing through the unloading station 150, to the initial station P1 of the first path 110 and start a new building cycle.

In an embodiment, the manipulator 190 is a non-anthropomorphic Cartesian moving device, which allows movement according to three Cartesian axes X, Y, Z and, preferably, rotation about two of said Cartesian axes X and Y.

Alternatively, the manipulator 190 may be made from one or more anthropomorphic robots, preferably with a robotized arm having at least 6 axes of movement.

In particular, it should be noted that, for the purposes of the invention, the manipulator 190 may be made from a single device or several devices.

In order to allow a drum change that provides for both a replacement of the N drums 100 configured for the first size with N drums 200 configured for a second size and a replacement of the first pair of support elements 101 with a second pair of support elements 201 configured for the second size, the line 20 also comprises a storage station 160 configured to store a first connecting shaft 161 and a second connecting shaft 162 coupled with the second pair of support elements 201.

The line 20 also comprises a transfer device 140 (for example a trolley) configured to transport the N drums 200 configured for the second size and the N drums 100 configured for the first size.

For example, the transfer device 140 may be configured to make the N drums 200 configured for the second size enter the line 20 taking them from a suitable store (not shown) inside or outside the line 20 and to subsequently make the N drums 100 configured for the first size leave the line 20 transporting them to said store.

During the drum change operating condition to said second size, after the exit from the first path 110 of a last drum of the N drums configured for the first size, the manipulator 190 is configured to pick up said first connecting shaft 161 from the storage station 160 and deliver it to said moving device 170, preferably at said initial station P1.

In turn, during the drum change operating condition to said second size, the moving device 170 is configured, preferably at said initial station P1, to receive said first connecting shaft 161 and couple it with said first pair of support elements 101, to move said first pair of support elements 101 coupled with said first connecting shaft 161 along the first path 110 and to then release said first pair of support elements 101 coupled with said first connecting shaft 161 to said second path 120.

In turn, during the drum change operating condition to said second size, the support and transportation devices 180 are configured to pick up said first pair of support elements 101 coupled with said first connecting shaft 161 from said first path 110 and to move said first pair of support elements 101 coupled with said first connecting shaft 161 along said second path 120 up to the final station P2.

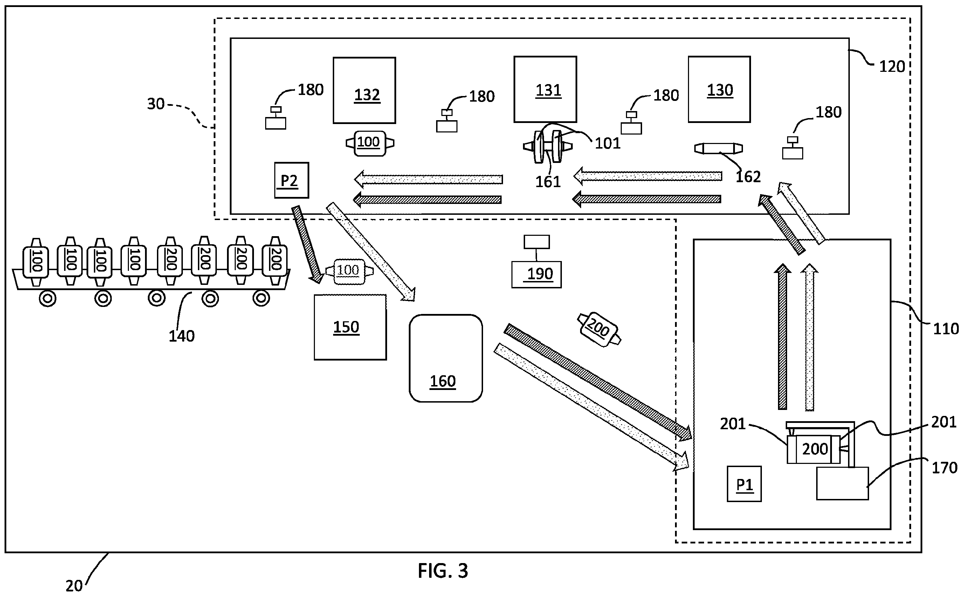

In this way, as illustrated in figure 3, said first pair of support elements 101 coupled with said first connecting shaft 161 is moved along said second path 120 following the last of the N drums 100 configured for the first size.

During the drum change operating condition to said second size, the manipulator 190 is also configured to pick up said first pair of support elements 101 coupled with said first connecting shaft 161 from the final station P2 of said second path 120 and deliver it to said storage station 160 (without passing through unloading station 150).

In Figures 2-3, the dotted white arrows schematically show the overall path followed within the line 20 first by the first connecting shaft 161 alone (path going from storage station 160 to initial station P1 of first path 110) and then by the first pair of support elements 101 coupled with said first connecting shaft 161 (path that from initial station P1 of the first path 110 goes back to unloading station 160).

As can be seen, during the drum change operating condition in which it becomes necessary to replace the first pair of support elements 101 of the first size, the latter is removed from the building cycle with the help of the first connecting shaft 161 exploiting the same resources (manipulator 190, moving device 170 and support and transportation devices 180) and the same path (building path 30) used to move the N drums 100 configured for the first size during the steady state operating condition with the only difference that, from the final station P2, the drums 100 configured for the first size are brought back to the initial station P1 passing through the unloading station 150 while the first pair of support elements 101 coupled with said first connecting shaft 161 is delivered to the storage station 160.

The exploitation of the same resources makes it possible to advantageously carry out the drum change, minimizing the required investments and the impact on the layout of the line 20. In addition, the use of the same building path advantageously makes it possible to carry out the drum change without requiring interruptions to the building process and minimizing the impact on the building cycle time. The removal of the first pair of support elements 101 is therefore carried out without affecting the building process.

Preferably, during the drum change operating condition to said second size, the manipulator 190 is also configured to pick up said second connecting shaft 162 coupled with said second pair of support elements 201 from the storage station 160 and deliver it to said moving device 170, preferably at said initial station P1.

It should be noted that the fact that the first pair of support elements 101 of the first size is removed from the building cycle and delivered to the storage station 160 by making it follow the flow of the N drums 100 configured for the first size along the building path 30 avoids making the first pair of support elements 101 (coupled with the first connecting shaft 161) return directly back from the first path 110 to the storage station 160, with a pickup by the manipulator 190 after the decoupling from the moving device 170. This advantageously makes it possible to avoid waiting times by allowing the manipulator 190 to start carrying out the aforementioned withdrawal from the storage station 160 of the second connecting shaft 162 immediately after having delivered the first connecting shaft 161 to the moving device 170.

Preferably, during the drum change operating condition to said second size, after having delivered the first pair of support elements 101 coupled with the first connecting shaft 161 to the second path 120, the moving device 170 is configured to receive said second connecting shaft 162 coupled with said second pair of support elements 201 from the manipulator 190, to couple said second pair of support elements 201 with itself and to move said second pair of support elements 201 coupled with said second connecting shaft 162 along the first path 110 to then decouple said second pair of support elements 201 from said second connecting shaft 162 and release to said second path 120 said second connecting shaft 162 decoupled from said second pair of support elements 201 which remains coupled with said moving device 170.

Preferably, during the drum change operating condition to said second size, the support and transportation devices 180 are configured to pick up said second connecting shaft 162 from said first path 110 and move it along said second path 120 up to the final station P2.

In this way, said second connecting shaft 162 is moved along said second path 120 following the first pair of support elements 101 coupled with said first connecting shaft 161 which, in turn, follows the last of the N drums 100 configured for the first size.

Preferably, during the drum change operating condition to said second size, the manipulator 190 is configured to pick up said second connecting shaft 162 from the final station P2 of said second path 120 and deliver it to said storage station 160 (without passing through the unloading station 150).

In Figures 2-3, the dotted white arrows schematically show the overall path followed, within the line 20, first by the second connecting shaft 162 coupled with the second pair of support elements 201 (path going from the storage station 160 that reaches the initial station P1 to then arrive at the end of the first path 110) and then by the second connecting shaft 162 alone (path that from the end of the first path 110 returns to the unloading station 160).

As can be seen, during the drum change operating condition, in which it becomes necessary to introduce into the line 20 the second pair of support elements 201 of the second size in place of the first pair of support elements 101 of the first size, the second pair of support elements 201 is introduced into the building cycle with the help of the second connecting shaft 162 which is managed by exploiting the same resources (manipulator 190, moving device 170 and support and transportation devices 180) and the same path (building path 30) used to move the N drums 100 configured for the first size during the steady state operating condition.

The fact that the second connecting shaft 162 is returned to the storage station 160 by making it follow the flow of the N drums 100 configured for the first size along the building path 30, avoids making the second connecting shaft 162 return directly back from the first path 110 to the storage station 160, with a pickup by the manipulator 190. This advantageously makes it possible to avoid waiting times, allowing the manipulator 190 to start carrying out the subsequent operations (and in particular picking up of the first drum of the N drums 200 configured for the second size) immediately after having delivered the second connecting shaft 162 coupled with the second pair of support elements 201 to the moving device 170.

According to the description, the drum change is carried out in a completely automated manner without requiring additional resources (apart from the storage station 160, the two connecting shafts 161, 162, the N drums 200 configured for the second size and the second pair of support elements 201) or an interruption of the tyre building within the line 20. This advantageously enables to carry out the drum change while minimizing the investment required and the impact on the layout of the line, on the tyre building process and on the building cycle time.

In order to enable to exploit the same resources (manipulator 190, moving device 170 and support and transportation devices 180) used to move the N drums 100 configured for the first size and the N drums 200 configured for the second size, the first connecting shaft 161 and the second connecting shaft 162 preferably have a predefined axial extension that is comparable to, preferably substantially equal to, a maximum axial extension provided for the N drums 100 configured for the first size and the N drums 200 configured for the second size.

Preferably, again for this purpose, the first connecting shaft 161 and the second connecting shaft 162 are respectively coupled with said first pair of support elements 101 and with said second pair of support elements 201 so as to keep their predefined axial extension unaltered. In other words, the first pair of support elements 101 and the second pair of support elements 201 are respectively coupled with the first connecting shaft 161 and with the second connecting shaft 162 so as not to protrude with respect to two axial ends thereof.

Preferably, again in order to enable to exploit the same resources (manipulator 190, moving device 170 and support and transportation devices 180) used to move the N drums 100 configured for the first size and the N drums 200 configured for the second size, the first connecting shaft 161 and the second connecting shaft 162 each have two axial ends having substantially the same shape and dimensions as those of two axial ends of the N drums 100 configured for the first size and the N drums 200 configured for the second size.

Preferably, the first connecting shaft 161 and the second connecting shaft 162 are the same.

Thanks to the aforementioned provisions, the manipulator 190, the moving device 170 and the support and transportation devices 180, already configured to handle the N drums 100 configured for the first size and the N drums 200 configured for the second size (engaging them at their axial ends), can be exploited to handle the first connecting shaft 161 and the second connecting shaft 162 (engaging them at their axial ends) without the need for specific adaptations.

Preferably, the N drums 100 configured for the first size and the N drums 200 configured for the second size have axial ends with substantially the same shape and size.

Preferably, the manipulator 190 is configured to handle the first connecting shaft 161 and the second connecting shaft 162 with axes thereof oriented vertically.

In order to strengthen the anchoring of the first pair of support elements 101 and the second pair of support elements 201 to the first connecting shaft 161 and the second connecting shaft 162, respectively, during a movement of the first connecting shaft 161 and the second connecting shaft 162 by the manipulator 190, the first connecting shaft 161 and the second connecting shaft 162 are preferably provided with a safety tooth which, activated by a spring mechanism, is adapted for engaging the respective pairs of support elements 101, 201 avoiding the axial movement thereof.

Preferably, the line 20 is configured to implement a recognition system whereby the manipulator 190, the moving device 170, the support and transportation devices 180, the workstations within the first path 110 and the workstations 130, 131, 132 within the second path 120 are provided with recognition devices adapted for recognizing suitable identification devices associated with the N drums 100 configured for the first size and with the N drums 200 configured for the second size, with the first connecting shaft 161 and with the second connecting shaft 162 so as to activate the appropriate operations each time, according to what has been described above.

In particular, the moving device 170 is preferably configured to recognize said first connecting shaft 161 and consequently activate the coupling of said first pair of support elements 101 with said first connecting shaft 161, the movement of said first pair of support elements 101 coupled with said first connecting shaft 161 along the first path 110 and then the decoupling thereof from the moving device 170 for release to the second path 120.

Further, the moving device 170 is preferably configured to recognize said second connecting shaft 162 coupled with said second pair of support elements 201 and consequently activate the coupling of said second pair of support elements 201 with the moving device 170 itself, the movement of said second pair of support elements 201 coupled with said second connecting shaft 162 along the first path 110, the decoupling of said second pair of support elements 201 from the second connecting shaft 162 to release the second connecting shaft 162 to said second path 120.

The workstations within the first path 110, the workstations 130, 131, 132 within the second path 120 and the support and transportation devices 180 are preferably configured to recognize the first connecting shaft 161 and the second connecting shaft 162 so as to disable tyre building operations during the movement thereof along the first path 110 and the second path 120.

Finally, the manipulator 190 is configured to recognize the first connecting shaft 161 and the second connecting shaft 162 so as to deliver them to the storage station 160, after pickup from the final station P2 of the second path 120.

During the drum change operating condition to said second size, it is provided to make the transfer device 140, with the N drums 200 configured for the second size, enter the line 20.

During the drum change operating condition to said second size, after the coupling of said second pair of support elements 201 with said moving device 170 and the exit of said second connecting shaft 162 from said first path 110, the manipulator 190 is configured to pick up from the transfer device 140 one after the other the N drums 200 configured for the second size and deliver them to the moving device 170 of the first path 110, preferably at the initial station P1.

In turn, the moving device 170 is configured to receive one at a time the N drums 200 configured for the second size, to couple them with said second pair of support elements 201, preferably at the initial station P1, and then to move them along said first path.

In turn, the support and transportation devices 180 are configured to pick up, one after the other, said N drums 200 configured for the second size arriving at the end of the first path 110 and move them along said second path 120 to the final station P2.

Furthermore, the manipulator 190 is configured to pick up one after the other the N drums 200 configured for the second size as they arrive at the final station P2 of the second path 120 and deliver the respective tyres being processed built on them to the unloading station 150 and the N drums 200 configured for the second size (thus dissociated from the respective tyres being processed) to said moving device 170, preferably at the initial station P1 of the first path 110.

During the drum change operating condition, it is further provided for to make the N drums 100 configured for the first size exit from the line 20 as they finish their building cycle at the unloading station 150, after the movement along the first path 110 and the second path 120.

Preferably, the manipulator 190 is configured to pick up the N drums 100 configured for the first size one after the other as they arrive at the unloading station 150 and to deliver them (disassociated from the respective tyres being processed unloaded in the unloading station 150) to the transfer device 140.

Once all the N drums 100 configured for the first size have been delivered to the transfer device 140, the latter is preferably adapted for transporting them into a suitable store (not illustrated).

While in figure 2 the line 20 is shown in a steady state operating condition with the N drums 100 configured for the first size and the first pair of support elements 101 configured for the first size, figure 3 shows as an example the line 20 of figure 2 in a drum change operating condition. In particular, Figure 3 shows a moment in which:
- the second connecting shaft 162 is located along the second path 120 immediately after the first pair of support elements 101 coupled with said first connecting shaft 161 which, in turn, is located along the second path 120 immediately after the last of the N drums 100 configured for the first size;
- the first of the N drums 200 configured for the second size is located in the first path 110 where it is moved, coupled with the second pair of support elements 201, by the moving device 170;
- some of the N drums 100 configured for the first size have already been delivered to the transfer device 140 while some of the N drums 200 configured for the second size are still in the transfer device 140, waiting to enter the building cycle.

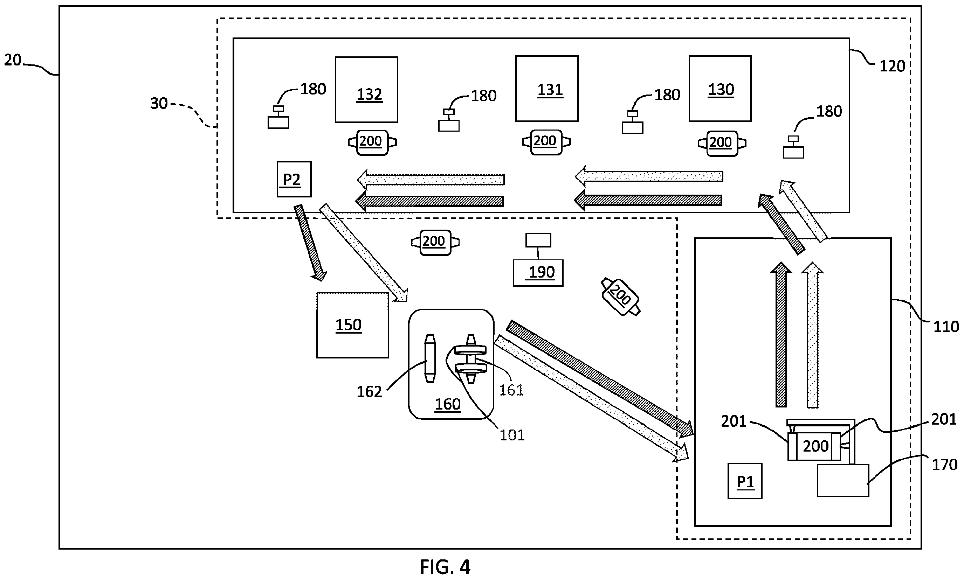

Figure 4 shows the line 20 of Figure 2 at the end of the drum change from the first size to the second size in a steady state operating condition with the N drums 200 configured for the second size and the second pair of support elements 201 configured for the second size, after all the N drums 100 configured for the first size have been transported out of the line 20 by the transfer device 140 (no longer visible in figure 4) and with the first connecting shaft 161, coupled with the first pair of support elements 101, as well as the second connecting shaft 162 stored in the storage station 160.

The dark grey arrows in figure 4 schematically show the overall path followed within line 20 by the N drums 200 configured for the second size during the steady state operating condition.

It is clear that for a subsequent possible change of drums from the second size to the first size, the same operations described above with reference to the drum change from the first size to the second size will be applied in an analogous manner.

In such a case, the second connecting shaft 162 and the first connecting shaft 161 (respectively coupled or not with the second pair of support elements 201 and with the first pair of support elements 101) will follow the path indicated by the white dotted arrows in an analogous manner to that described above with reference to figures 2-3 but with roles reversed.

In the case of a drum change from the second size to a third size, as well as making N drums configured for the third size (not illustrated) enter the line 20, with the help of the transfer device 140, it will be necessary to make a third connecting shaft connected to a third pair of support elements (not illustrated) configured for the third size enter the line 20 (for example by exploiting the transfer device 140). Alternatively, the storage station may be preconfigured to store such a third connecting shaft connected to a third pair of support elements, as well as the first connecting shaft 161 associated with the first pair of support elements 101 and the second connecting shaft 162.

In an embodiment, the transfer device 140 may also be used to make the first/second connecting shaft 161, 162 connected to the first/second pair of support elements 101, 201 exit the line 20 if they are no longer needed for the subsequent building cycles.

Preferably, the first size corresponds to a first fitting diameter, the second size corresponds to a second fitting diameter different from the first and the possible third size corresponds to a third fitting diameter different from the first and the second.

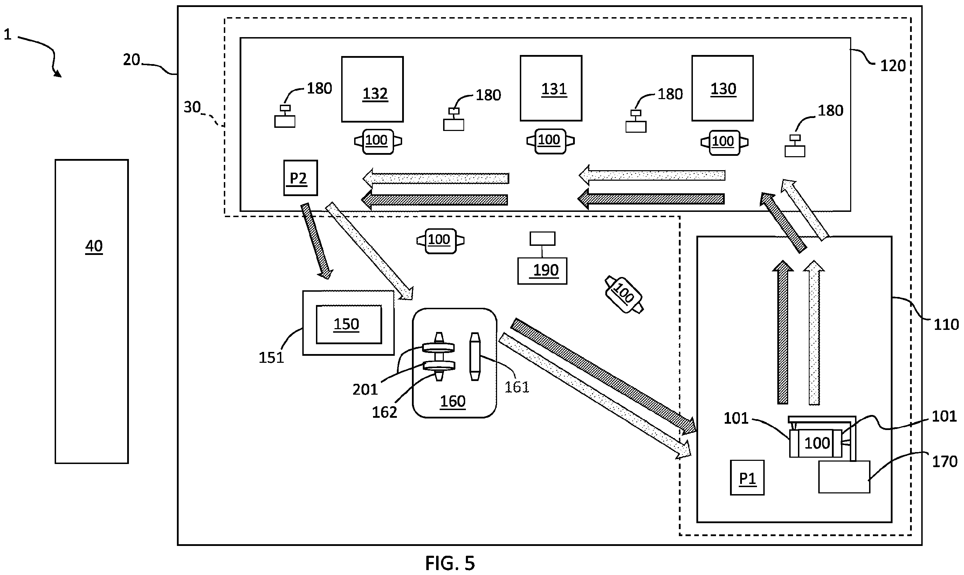

Figure 5 shows a plant 1 for producing tyres 2 for vehicle wheels in which the line 20 according to the invention can be used.

The plant 1 comprises a carcass structure building line implemented by the line 20 described above, a crown structure building line 40 and a shaping and assembly station 151 comprising the unloading station 150 described above.

In a steady-state operating condition of the plant 1, the carcass structure building line implemented by the line 20 is adapted for building (simultaneously for N>1) N carcass structures with the help of the N drums 100 configured for the first size.

The first path 110 of the line 20 that implements the carcass structure building line may comprise, for example, at least some of the following workstations (not illustrated):
- a complex application station (which comprises liner, under-liner and anti-abrasive inserts);
- at least one carcass ply application station;
- an optional station for the application of metal and/or textile reinforcements;
- an optional under-belt insert application station
- an optional sidewall insert application station.

Moreover, in the line 20 that implements the carcass structure building line, the station 130 of the second path 120, immediately downstream of the first path 110, can be for example configured to sequentially carry out, on one of the N drums 100 configured for the first size at a time, the engagement of axially opposite ends of the carcass structure being processed with respective annular anchoring structures.

Moreover, the other workstations 131, 132 of the second path 120 may, for example, be configured to implement at least one of the following workstations:
- a station for applying anti-abrasive inserts by spiral coiling a continuous elongated element about the N drums 100 configured for the first size, one at a time;
- a sidewall portion application station by spiral coiling a continuous elongated element about the N drums 100 configured for the first size, one at a time.

In the steady-state operating condition of the plant 1, the crown structure building line 40 is adapted for building crown structures with the help of suitable drums and one or more work stations (not illustrated).

In a drum change operating condition, the carcass structure building line is adapted for implementing the change according to what is described above.

The shaping and assembly machine 151 is adapted for sequentially shaping, one at a time, the N carcass structures, as they arrive from the carcass structure building line, and assembling them to the respective crown structures, as they arrive from the crown structure building line 40, so as to obtain a green tyre. The shaping and assembly machine 151 is preferably adapted for shaping the carcass structures and assembling them to respective crown structures on a respective shaping drum (not illustrated). It therefore operates on carcass and crown structures dissociated from the respective building drums.

Downstream of the shaping and assembly machine 151, the plant 1 also comprises at least one moulding and vulcanization unit (not illustrated) where the built green tyres, exiting said shaping and assembly machine 151, are transferred to actuate a moulding and vulcanization process adapted for defining the structure of the tyre according to a desired geometry and tread pattern, in order to obtain finished tyres.

The crown structure building line 40, the shaping and assembly machine 151, and the moulding and vulcanization unit are made according to techniques known in the art for which reason they are not described in detail.

## Claims

1. Method for managing a process for building tyres (2) for vehicle wheels between a steady-state operating condition and a drum-change operating condition, comprising, during the steady-state operating condition:
- sequentially and cyclically moving N drums (100) configured for a first size along a building path (30) comprising a first path (110), with N being an integer greater than or equal to 1,
wherein:
- the movement along the first path (110) is carried out by moving, with a moving device (170), one of the N drums (100) configured for the first size at a time, coupled with a first pair of axially opposite support elements (101), said first pair of support elements (101) being coupled with the moving device (170) and being configured for said first size; and wherein:
- during the drum-change operating condition to a second size, the method comprises the replacement of said first pair of support elements (101) with a second pair of support elements (201) configured for said second size, said replacement comprising, after a last drum of the N drums (100) configured for the first size exits from the first path (110):
• coupling said first pair of support elements (101) with a first connecting shaft (161),
• moving, with the moving device (170), said first pair of support elements (101) coupled with said first connecting shaft (161) along said first path (110),
• releasing said first pair of support elements (101) coupled with said first connecting shaft (161) at the end of the first path (110) after having decoupled it from the moving device (170), and
• after said first pair of support elements (101) coupled with said first connecting shaft (161) exits from the first path (110), coupling said second pair of support elements (201) with said moving device (170).

2. Method according to claim 1, wherein said building path (30) comprises a second path (120) that follows said first path (110), said first pair of support elements (101) being released to said second path (120) at the end of the first path (110), wherein said replacement comprises moving said first pair of support elements (101) coupled with said first connecting shaft (161) along said second path (120).

3. Method according to claim 2, wherein, during the drum-change operating condition, before the coupling with said first pair of support elements (101), said first connecting shaft (161) is picked up from a storage station (160) upstream of the first path (110) and, after the movement along said second path (120), said first pair of support elements (101) coupled with said first connecting shaft (161) is delivered to said storage station (160) downstream of the second path (120).

4. Method according to claim 3, wherein the coupling of said second pair of support elements (201) with said moving device (170) is carried out by:
- picking up a second connecting shaft (162) from said storage station (160), said second connecting shaft (162) being coupled with said second pair of support elements (201); and
- delivering said second connecting shaft (162) picked up from the storage station (160) to said first path (110) where said second pair of support elements (201) is coupled with said moving device (170).

5. Method according to claim 4, wherein the coupling of said second pair of support elements (201) with said moving device (170) comprises:
- the movement, with the moving device (170), of said second pair of support elements (201) coupled with said second connecting shaft (162) along said first path (110); and
- the release to said second path (120) of said second connecting shaft (162) after having decoupled it from said second pair of support elements (201) that remains coupled with the moving device (170).

6. Method according to claim 5, comprising, during the drum-change operating condition, the movement of said second connecting shaft (162) decoupled from said second pair of support elements (201) along said second path (120); and wherein, after the movement along said second path (120), said second connecting shaft (162) is delivered to said storage station (160) downstream of the second path (120).

7. Method according to any one of the preceding claims 2-6, wherein:
- after the coupling of said second pair of support elements (201) with said moving device (170), it is provided to deliver, one after the other, N drums (200) configured for the second size to the moving device (170) of the first path (110) where they are coupled, one at a time, with said second pair of support elements (201) for the movement along said first path (110); and
- after the movement along said first path (110), the N drums (200) configured for the second size are moved one after the other along said second path (120).

8. Method according to any one of the preceding claims 2 to 7, wherein:
- during the steady-state operating condition, after the movement along said first path (110), the N drums (100) configured for the first size are moved one after the other along said second path (120) up to a final station (P2) from which they are picked up to be brought back to an initial station (P1) of the first path (110), after having unloaded the tyres (2) being processed built on them to an unloading station (150) downstream of the second path (120); and
- during the drum-change operating condition, after the movement along said second path (120), the N drums (100) configured for the first size are picked up from the final station (P2) to be delivered to a transfer device (140), after having unloaded the tyres (2) being processed built on them to the unloading station (150) downstream of the second path (120).

9. Method according to claims 7 and 8, wherein, once said N drums (100) configured for the first size have all been delivered to the transfer device (140) and the N drums (200) configured for the second size have all been delivered, one after the other, to the moving device (170), the steady-state operating condition is re-established in which the N drums (200) configured for the second size are moved sequentially and cyclically along the building path (30).

10. Line (20) for building tyres (2) for vehicle wheels operating according to a steady-state operating condition and a drum-change operating condition, comprising:
- N drums (100) configured for a first size, with N being an integer greater than or equal to 1,
- a first pair of support elements (101) configured for said first size,
- a building path (30) configured to carry out on said N drums (100) configured for the first size, during the steady-state operating condition, multiple building cycles of tyres (2) according to said first size, the building path (30) comprising a first path (110),
- a first connecting shaft (161),
- a second pair of support elements (201) configured for a second size,
- a moving device (170) in said first path (110) that, during the steady-state operating condition, is coupled with said first pair of support elements (101) and is configured to move, along said first path (110), one of the N drums (100) configured for the first size at a time, coupled with the first pair of support elements (101), and that, during the drum-change operating condition to said second size, is configured to couple said first connecting shaft (161) with said first pair of support elements (101), to release said first connecting shaft (161) coupled with said first pair of support elements (101) at the end of said first path (110) and to couple with said second pair of support elements (201);
- at least one manipulator (190) that, during the drum-change operating condition to said second size, is configured to:
• deliver said first connecting shaft (161) to said moving device (170),
• deliver said second pair of support elements (201) to said moving device (170).

11. Line (20) according to claim 10, wherein said building path (30) comprises a second path (120) that follows said first path (110) and wherein said moving device (170), during the drum-change operating condition to said second size, is configured to release said first connecting shaft (161) to said second path (120).

12. Line (20) according to claim 10 or 11, comprising a storage station (160) configured to store at least said first connecting shaft (161) and said second pair of support elements (201) configured for the second size; and wherein said at least one manipulator (190) during the drum-change operating condition to said second size is configured to pick up said first connecting shaft (161) and said second pair of support elements (201) from said storage station (160).

13. Line (20) according to claim 12, wherein the storage station (160) is configured to store a second connecting shaft (162) coupled with said second pair of support elements (201); and wherein, during the drum-change operating condition to said second size:
- said at least one manipulator (190) is configured to pick up said second connecting shaft (162) coupled with said second pair of support elements (201) from the storage station (160) and to deliver it to said moving device (170); and
- the moving device (170) is configured to receive from the at least one manipulator (190) said second connecting shaft (162) coupled with said second pair of support elements (201), to couple said second pair of support elements (201) with the moving device (170) itself and to decouple said second pair of support elements (201) from said second connecting shaft (162).

14. Line (20) according to any one of claims 10 to 13, comprising N drums (200) configured for the second size, wherein, after the coupling of said second pair of support elements (201) with the moving device (170), said at least one manipulator (190) is adapted to deliver the N drums (200) configured for the second size, one after the other, to the moving device (170) of the first path (110).

15. Line (20) according to claims 13 or 14, wherein the first connecting shaft (161) and the second connecting shaft (162):
- have a predetermined axial extension that is substantially equal to a maximum axial extension provided for the N drums (100) configured for the first size and the N drums (200) configured for the second size; and
- each have two axial ends having the same shape and the same size as those of two axial ends of the N drums (100) configured for the first size and of the N drums (200) configured for the second size.

## Patentansprüche

1. Verfahren zum Verwalten eines Prozesses zum Herstellen von Reifen (2) für Fahrzeugräder zwischen einem stationären Betriebszustand und einem Trommelwechselbetriebszustand, umfassend, während des stationären Betriebszustands:
- aufeinanderfolgendes und zyklisches Bewegen von N Trommeln (100), die für eine erste Größe konfiguriert sind, entlang eines Herstellungspfads (30), der einen ersten Pfad (110) umfasst, wobei N eine ganze Zahl größer als oder gleich 1 ist,
wobei:
- die Bewegung entlang des ersten Pfads (110) ausgeführt wird, indem eine der N Trommeln (100), die jeweils für die erste Größe konfiguriert sind, die mit einem ersten Paar von axial gegenüberliegenden Stützelementen (101) gekoppelt ist, mit einer Bewegungsvorrichtung (170) bewegt wird, wobei das erste Paar von Stützelementen (101) mit der Bewegungsvorrichtung (170) gekoppelt ist und für die erste Größe konfiguriert ist; und wobei:
- während des Trommelwechselbetriebszustands auf eine zweite Größe das Verfahren das Ersetzen des ersten Paars von Stützelementen (101) durch ein zweites Paar von Stützelementen (201) umfasst, die für die zweite Größe konfiguriert sind, wobei das Ersetzen, nachdem eine letzte Trommel der N Trommeln (100), die für die erste Größe konfiguriert sind, den ersten Pfad (110) verlässt, Folgendes umfasst:
• Koppeln des ersten Paars von Stützelementen (101) mit einer ersten Verbindungswelle (161),
• Bewegen des ersten Paars von Stützelementen (101), das mit der ersten Verbindungswelle (161) gekoppelt ist, mit der Bewegungsvorrichtung (170) entlang des ersten Pfads (110),
• Freigeben des ersten Paars von Stützelementen (101), das mit der ersten Verbindungswelle (161) gekoppelt ist, an dem Ende des ersten Pfads (110), nachdem es von der Bewegungsvorrichtung (170) entkoppelt wurde, und
• nachdem das erste Paar von Stützelementen (101), das mit der ersten Verbindungswelle (161) gekoppelt ist, den ersten Pfad (110) verlässt, Koppeln des zweiten Paars von Stützelementen (201) mit der Bewegungsvorrichtung (170).

2. Verfahren nach Anspruch 1, wobei der Herstellungspfad (30) einen zweiten Pfad (120) umfasst, der dem ersten Pfad (110) folgt, wobei das erste Paar von Stützelementen (101) an dem Ende des ersten Pfads (110) an den zweiten Pfad (120) freigegeben wird, wobei das Ersetzen Bewegen des ersten Paars von Stützelementen (101), das mit der ersten Verbindungswelle (161) gekoppelt ist, entlang des zweiten Pfads (120) umfasst.

3. Verfahren nach Anspruch 2, wobei, während des Trommelwechselbetriebszustands, vor dem Koppeln mit dem ersten Paar von Stützelementen (101), die erste Verbindungswelle (161) aus einer Lagerstation (160) stromaufwärts des ersten Pfads (110) aufgenommen wird und, nach der Bewegung entlang des zweiten Pfads (120), das erste Paar von Stützelementen (101), das mit der ersten Verbindungswelle (161) gekoppelt ist, an die Lagerstation (160) stromabwärts des zweiten Pfads (120) geliefert wird.

4. Verfahren nach Anspruch 3, wobei das Koppeln des zweiten Paars von Stützelementen (201) mit der Bewegungsvorrichtung (170) ausgeführt wird durch:
- Aufnehmen einer zweiten Verbindungswelle (162) aus der Lagerstation (160), wobei die zweite Verbindungswelle (162) mit dem zweiten Paar von Stützelementen (201) gekoppelt ist; und
- Liefern der zweiten Verbindungswelle (162), die aus der Lagerstation (160) aufgenommen wurde, zum ersten Pfad (110), wo das zweite Paar von Stützelementen (201) mit der Bewegungsvorrichtung (170) gekoppelt ist.

5. Verfahren nach Anspruch 4, wobei das Koppeln des zweiten Paars von Stützelementen (201) mit der Bewegungsvorrichtung (170) umfasst:
- die Bewegung des zweiten Paars von Stützelementen (201), das mit der zweiten Verbindungswelle (162) gekoppelt ist, mit der Bewegungsvorrichtung (170) entlang des ersten Pfads (110); und
- die Freigabe der zweiten Verbindungswelle (162) an den zweiten Pfad (120), nachdem sie von dem zweiten Paar von Stützelementen (201) entkoppelt wurde, das mit der Bewegungsvorrichtung (170) gekoppelt bleibt.

6. Verfahren nach Anspruch 5, umfassend, während des Trommelwechselbetriebszustands, die Bewegung der zweiten Verbindungswelle (162), die von dem zweiten Paar von Stützelementen (201) entkoppelt ist, entlang des zweiten Pfads (120); und wobei nach der Bewegung entlang des zweiten Pfads (120) die zweite Verbindungswelle (162) an die Lagerstation (160) stromabwärts des zweiten Pfads (120) geliefert wird.

7. Verfahren nach einem der vorstehenden Ansprüche 2-6, wobei:
- nach dem Koppeln des zweiten Paars von Stützelementen (201) mit der Bewegungsvorrichtung (170) bereitgestellt wird, N Trommeln (200), die für die zweite Größe konfiguriert sind, eine nach der anderen an die Bewegungsvorrichtung (170) des ersten Pfads (110) zu liefern, wo sie nacheinander mit dem zweiten Paar von Stützelementen (201) für die Bewegung entlang des ersten Pfads (110) gekoppelt werden; und
- nach der Bewegung entlang des ersten Pfads (110), die N Trommeln (200), die für die zweite Größe konfiguriert sind, eine nach der anderen entlang des zweiten Pfads (120) bewegt werden.

8. Verfahren nach einem der vorstehenden Ansprüche 2 bis 7, wobei:
- während des stationären Betriebszustands, nach der Bewegung entlang des ersten Pfads (110), die N Trommeln (100), die für die erste Größe konfiguriert sind, eine nach der anderen entlang des zweiten Pfads (120) bis zu einer Endstation (P2) bewegt werden, von der sie aufgenommen werden, um zu einer Anfangsstation (P1) des ersten Pfads (110) zurückgebracht zu werden, nachdem die an ihnen angebrachten verarbeiteten Reifen (2) zu einer Entladestation (150) stromabwärts des zweiten Pfads (120) entladen wurden; und
- während des Trommelwechselbetriebszustands, nach der Bewegung entlang des zweiten Pfads (120), die N Trommeln (100), die für die erste Größe konfiguriert sind, von der Endstation (P2) aufgenommen werden, um an eine Transfervorrichtung (140) geliefert zu werden, nachdem die an ihnen angebrachten verarbeiteten Reifen (2) zu der Entladestation (150) stromabwärts des zweiten Pfads (120) entladen wurden.

9. Verfahren nach den Ansprüchen 7 und 8, wobei, sobald die N Trommeln (100), die für die erste Größe konfiguriert sind, alle an die Transfervorrichtung (140) geliefert wurden, und die N Trommeln (200), die für die zweite Größe konfiguriert sind, alle eine nach der anderen an die Bewegungsvorrichtung (170) geliefert wurden, der stationäre Betriebszustand wiederhergestellt wird, in dem die N Trommeln (200), die für die zweite Größe konfiguriert sind, aufeinanderfolgend und zyklisch entlang des Herstellungspfads (30) bewegt werden.

10. Linie (20) zum Herstellen von Reifen (2) für Fahrzeugräder, die gemäß einem stationären Betriebszustand und einem Trommelwechselbetriebszustand betrieben wird, umfassend:
- N Trommeln (100), die für eine erste Größe konfiguriert sind, wobei N eine ganze Zahl größer als oder gleich 1 ist,
- ein erstes Paar von Stützelementen (101), die für die erste Größe konfiguriert sind,
- einen Herstellungspfad (30), der konfiguriert ist, um auf den N Trommeln (100), die für die erste Größe konfiguriert sind, während des stationären Betriebszustands mehrere Herstellungszyklen von Reifen (2) gemäß der ersten Größe auszuführen, wobei der Herstellungspfad (30) einen ersten Pfad (110) umfasst,
- eine erste Verbindungswelle (161),
- ein zweites Paar von Stützelementen (201), die für eine zweite Größe konfiguriert sind,
- eine Bewegungsvorrichtung (170) auf dem ersten Pfad (110), die während des stationären Betriebszustands mit dem ersten Paar von Stützelementen (101) gekoppelt ist und konfiguriert ist, um entlang des ersten Pfads (110) eine der N Trommeln (100) zu bewegen, die jeweils für die erste Größe konfiguriert sind, die mit dem ersten Paar von Stützelementen (101) gekoppelt ist, und die, während des Trommelwechselbetriebszustands auf die zweite Größe, konfiguriert ist, um die erste Verbindungswelle (161) mit dem ersten Paar von Stützelementen (101) zu koppeln, um die erste Verbindungswelle (161), die mit dem ersten Paar von Stützelementen (101) gekoppelt ist, an dem Ende des ersten Pfads (110) freizugeben, und um mit dem zweiten Paar von Stützelementen (201) gekoppelt zu werden;
- mindestens einen Manipulator (190), der während des Trommelwechselbetriebszustands auf die zweite Größe konfiguriert ist, um:
• die erste Verbindungswelle (161) an die Bewegungsvorrichtung (170) zu liefern,
• das zweite Paar von Stützelementen (201) an die Bewegungsvorrichtung (170) zu liefern.

11. Linie (20) nach Anspruch 10, wobei der Herstellungspfad (30) einen zweiten Pfad (120) umfasst, der dem ersten Pfad (110) folgt, und wobei die Bewegungsvorrichtung (170) während des Trommelwechselbetriebszustands auf die zweite Größe konfiguriert ist, um die erste Verbindungswelle (161) an den zweiten Pfad (120) freizugeben.

12. Linie (20) nach Anspruch 10 oder 11, umfassend eine Lagerstation (160), die konfiguriert ist, um mindestens die erste Verbindungswelle (161) und das zweite Paar von Stützelementen (201), die für die zweite Größe konfiguriert sind, zu lagern; und wobei der mindestens eine Manipulator (190) während des Trommelwechselbetriebszustands auf die zweite Größe konfiguriert ist, um die erste Verbindungswelle (161) und das zweite Paar von Stützelementen (201) von der Lagerstation (160) aufzunehmen.

13. Linie (20) nach Anspruch 12, wobei die Lagerstation (160) konfiguriert ist, um eine zweite Verbindungswelle (162), die mit dem zweiten Paar von Stützelementen (201) gekoppelt ist, zu lagern; und wobei, während des Trommelwechselbetriebszustands auf die zweite Größe:
- der mindestens eine Manipulator (190) konfiguriert ist, um die zweite Verbindungswelle (162), die mit dem zweiten Paar von Stützelementen (201) gekoppelt ist, aus der Lagerstation (160) aufzunehmen und sie an die Bewegungsvorrichtung (170) zu liefern; und
- die Bewegungsvorrichtung (170) konfiguriert ist, um von dem mindestens einen Manipulator (190) die zweite Verbindungswelle (162) zu empfangen, die an das zweite Paar von Stützelementen (201) gekoppelt ist, um das zweite Paar von Stützelementen (201) mit der Bewegungsvorrichtung (170) selbst zu koppeln und das zweite Paar von Stützelementen (201) von der zweiten Verbindungswelle (162) zu entkoppeln.

14. Linie (20) nach einem der Ansprüche 10 bis 13, umfassend N Trommeln (200), die für die zweite Größe konfiguriert sind, wobei nach dem Koppeln des zweiten Paars von Stützelementen (201) mit der Bewegungsvorrichtung (170) der mindestens eine Manipulator (190) angepasst ist, um die N Trommeln (200), die für die zweite Größe konfiguriert sind, eine nach der anderen an die Bewegungsvorrichtung (170) des ersten Pfads (110) zu liefern.

15. Linie (20) nach den Ansprüchen 13 oder 14, wobei die erste Verbindungswelle (161) und die zweite Verbindungswelle (162):
- eine vorbestimmte axiale Erstreckung aufweisen, die im Wesentlichen gleich einer maximalen axialen Erstreckung ist, die für die N Trommeln (100), die für die erste Größe konfiguriert sind, und die N Trommeln (200), die für die zweite Größe konfiguriert sind, bereitgestellt wird; und
- jeweils zwei axiale Enden aufweisen, die die gleiche Form und die gleiche Größe aufweisen wie die von zwei axialen Enden der N Trommeln (100), die für die erste Größe konfiguriert sind, und der N Trommeln (200), die für die zweite Größe konfiguriert sind.

## Revendications

1. Procédé de gestion d'un processus de fabrication de pneus (2) pour roues de véhicule entre un état de fonctionnement en régime permanent et un état de fonctionnement avec changement de tambour, comprenant, pendant l'état de fonctionnement en régime permanent :
- le déplacement séquentiel et cyclique de N tambours (100) configurés pour une première taille le long d'un trajet de fabrication (30) comprenant un premier trajet (110), N étant un nombre entier supérieur ou égal à 1,
dans lequel :
- le déplacement le long du premier trajet (110) est effectué en déplaçant, avec un dispositif de déplacement (170), un des N tambours (100) configurés pour la première taille à la fois, couplé à une première paire d'éléments de support (101) axialement opposés, ladite première paire d'éléments de support (101) étant couplée au dispositif de déplacement (170) et étant configurée pour ladite première taille ; et dans lequel :
- pendant l'état de fonctionnement avec changement de tambour en une seconde taille, le procédé comprend le remplacement de ladite première paire d'éléments de support (101) par une seconde paire d'éléments de support (201) configurée pour ladite seconde taille, ledit remplacement comprenant, après la sortie d'un dernier tambour des N tambours (100) configurés pour la première taille du premier trajet (110) :
• le couplage de ladite première paire d'éléments de support (101) à un premier arbre de liaison (161),
• le déplacement, avec le dispositif de déplacement (170), de ladite première paire d'éléments de support (101) couplée audit premier arbre de liaison (161) le long dudit premier trajet (110),
• la libération de ladite première paire d'éléments de support (101) couplée audit premier arbre de liaison (161) à la fin du premier trajet (110) après l'avoir découplée du dispositif de déplacement (170), et
• après la sortie de ladite première paire d'éléments de support (101) couplée audit premier arbre de liaison (161) du premier trajet (110), le couplage de ladite seconde paire d'éléments de support (201) audit dispositif de déplacement (170).

2. Procédé selon la revendication 1, dans lequel ledit trajet de fabrication (30) comprend un second trajet (120) qui suit ledit premier trajet (110), ladite première paire d'éléments de support (101) étant libérée sur ledit second trajet (120) à la fin du premier trajet (110), dans lequel ledit remplacement comprend le déplacement de ladite première paire d'éléments de support (101) couplée audit premier arbre de liaison (161) le long dudit second trajet (120).

3. Procédé selon la revendication 2, dans lequel, pendant l'état de fonctionnement avec changement de tambour, avant le couplage avec ladite première paire d'éléments de support (101), ledit premier arbre de liaison (161) est prélevé d'un poste de stockage (160) en amont du premier trajet (110) et, après le déplacement le long dudit second trajet (120), ladite première paire d'éléments de support (101) couplée audit premier arbre de liaison (161) est remise audit de stockage (160) en aval du second trajet (120).

4. Procédé selon la revendication 3, dans lequel le couplage de ladite seconde paire d'éléments de support (201) audit dispositif de déplacement (170) est réalisé par :
- le prélèvement d'un second arbre de liaison (162) au niveau dudit poste de stockage (160), ledit second arbre de liaison (162) étant couplé à ladite seconde paire d'éléments de support (201) ; et
- la remise dudit second arbre de liaison (162) prélevé au poste de stockage (160) audit premier trajet (110) où ladite seconde paire d'éléments de support (201) est couplée audit dispositif de déplacement (170).

5. Procédé selon la revendication 4, dans lequel le couplage de ladite seconde paire d'éléments de support (201) audit dispositif de déplacement (170) comprend :
- le déplacement, avec le dispositif de déplacement (170), de ladite seconde paire d'éléments de support (201) couplée audit second arbre de liaison (162) le long dudit premier trajet (110) ; et
- la libération vers ledit second trajet (120) dudit second arbre de liaison (162) après l'avoir découplé de ladite seconde paire d'éléments de support (201) qui reste couplée au dispositif de déplacement (170).

6. Procédé selon la revendication 5, comprenant, pendant l'état de fonctionnement avec changement de tambour, le déplacement dudit second arbre de liaison (162) découplé de ladite seconde paire d'éléments de support (201) le long dudit second trajet (120) ; et dans lequel, après le déplacement le long dudit second trajet (120), ledit second arbre de liaison (162) est remis audit poste de stockage (160) en aval du second trajet (120).

7. Procédé selon l'une quelconque des revendications 2-6 précédentes, dans lequel :
- après le couplage de ladite seconde paire d'éléments de support (201) audit dispositif de déplacement (170), il convient de remettre, l'un après l'autre, N tambours (200) configurés pour la seconde taille au dispositif de déplacement (170) du premier trajet (110) où ils sont couplés, un à la fois, à ladite seconde paire d'éléments de support (201) pour le déplacement le long dudit premier trajet (110) ; et
- après le déplacement le long dudit premier trajet (110), les N tambours (200) configurés pour la seconde taille sont déplacés les uns après les autres le long dudit second trajet (120).

8. Procédé selon l'une quelconque des revendications 2 à 7 précédentes, dans lequel :
- pendant l'état de fonctionnement en régime permanent, après le déplacement le long dudit premier trajet (110), les N tambours (100) configurés pour la première taille sont déplacés les uns après les autres le long dudit second trajet (120) jusqu'à un poste final (P2) d'où ils sont prélevés pour être renvoyés à un poste initial (P1) du premier trajet (110), après avoir déchargé les pneus (2) en cours de traitement fabriqués sur eux vers un poste de déchargement (150) en aval du second trajet (120) ; et
- pendant l'état de fonctionnement avec changement de tambour, après le déplacement le long dudit second trajet (120), les N tambours (100) configurés pour la première taille sont prélevés du poste final (P2) pour être remis à un dispositif de transfert (140), après avoir déchargé les pneus (2) en cours de traitement fabriqués sur eux jusqu'au poste de déchargement (150) en aval du second trajet (120).

9. Procédé selon les revendications 7 et 8, dans lequel, une fois que lesdits N tambours (100) configurés pour la première taille ont tous été remis au dispositif de transfert (140) et que les N tambours (200) configurés pour la seconde taille ont tous été remis, l'un après l'autre, au dispositif de déplacement (170), l'état de fonctionnement en régime permanent est rétabli dans lequel les N tambours (200) configurés pour la seconde taille sont déplacés séquentiellement et cycliquement le long du trajet de fabrication (30).

10. Chaîne (20) de fabrication de pneus (2) pour roues de véhicule fonctionnant selon un état de fonctionnement en régime permanent et un état de fonctionnement avec changement de tambour, comprenant :
- N tambours (100) configurés pour une première taille, N étant un nombre entier supérieur ou égal à 1,
- une première paire d'éléments de support (101) configurée pour ladite première taille,
- un trajet de fabrication (30) configuré pour effectuer sur lesdits N tambours (100) configurés pour la première taille, pendant l'état de fonctionnement en régime permanent, de multiples cycles de fabrication de pneus (2) selon ladite première taille, le trajet de fabrication (30) comprenant un premier trajet (110),
- un premier arbre de liaison (161),
- une seconde paire d'éléments de support (201) configurée pour une seconde taille,
- un dispositif de déplacement (170) dans ledit premier trajet (110) qui, pendant l'état de fonctionnement en régime permanent, est couplé à ladite première paire d'éléments de support (101) et est configuré pour déplacer, le long dudit premier trajet (110), l'un des N tambours (100) configurés pour la première taille à la fois, couplé à la première paire d'éléments de support (101), et qui, pendant l'état de fonctionnement avec changement de tambour en ladite seconde taille, est configuré pour coupler ledit premier arbre de liaison (161) à ladite première paire d'éléments de support (101), pour libérer ledit premier arbre de liaison (161) couplé à ladite première paire d'éléments de support (101) à la fin dudit premier trajet (110) et pour se coupler à ladite seconde paire d'éléments de support (201) ;
- au moins un manipulateur (190) qui, pendant l'état de fonctionnement avec changement de tambour en ladite seconde taille, est configuré pour :
• remettre ledit premier arbre de liaison (161) audit dispositif de déplacement (170),
• remettre ladite seconde paire d'éléments de support (201) audit dispositif de déplacement (170).

11. Chaîne (20) selon la revendication 10, dans laquelle ledit trajet de fabrication (30) comprend un second trajet (120) qui suit ledit premier trajet (110) et dans laquelle ledit dispositif de déplacement (170), pendant l'état de fonctionnement avec changement de tambour en ladite seconde taille, est configuré pour libérer ledit premier arbre de liaison (161) vers ledit second trajet (120).

12. Chaîne (20) selon la revendication 10 ou 11, comprenant un poste de stockage (160) configuré pour stocker au moins ledit premier arbre de liaison (161) et ladite seconde paire d'éléments de support (201) configurée pour la seconde taille ; et dans laquelle ledit au moins un manipulateur (190) pendant l'état de fonctionnement avec changement de tambour en ladite seconde taille est configuré pour prélever ledit premier arbre de liaison (161) et ladite seconde paire d'éléments de support (201) dudit poste de stockage (160).

13. Chaîne (20) selon la revendication 12, dans laquelle le poste de stockage (160) est configuré pour stocker un second arbre de liaison (162) couplé à ladite seconde paire d'éléments de support (201) ; et dans laquelle, pendant l'état de fonctionnement avec changement de tambour en ladite seconde taille :
- ledit au moins un manipulateur (190) est configuré pour prélever ledit second arbre de liaison (162) couplé à ladite seconde paire d'éléments de support (201) du poste de stockage (160) et pour le remettre audit dispositif de déplacement (170) ; et
- le dispositif de déplacement (170) est configuré pour recevoir du au moins un manipulateur (190) ledit second arbre de liaison (162) couplé à ladite seconde paire d'éléments de support (201), pour coupler ladite seconde paire d'éléments de support (201) au dispositif de déplacement (170) lui-même et pour découpler ladite seconde paire d'éléments de support (201) dudit second arbre de liaison (162).

14. Chaîne (20) selon l'une quelconque des revendications 10 à 13, comprenant N tambours (200) configurés pour la seconde taille, dans laquelle, après le couplage de ladite seconde paire d'éléments de support (201) au dispositif de déplacement (170), ledit au moins un manipulateur (190) est conçu pour remettre les N tambours (200) configurés pour le second format, l'un après l'autre, au dispositif de déplacement (170) du premier trajet (110).

15. Chaîne (20) selon les revendications 13 ou 14, dans laquelle le premier arbre de liaison (161) et le second arbre de liaison (162) :
- présentent une extension axiale prédéterminée qui est sensiblement égale à une extension axiale maximale destinée aux N tambours (100) configurés pour la première taille et les N tambours (200) configurés pour la seconde taille ; et
- présentent chacun deux extrémités axiales de même forme et de même taille que celles de deux extrémités axiales des N tambours (100) configurés pour la première taille et des N tambours (200) configurés pour la seconde taille.
